# EUROPEAN PATENT SPECIFICATION

(11) **EP 1 476 486 B1**
(45) Date of publication and mention of the grant of the patent: **11.07.2007**
(21) Application number: 03710531.9
(22) Date of filing: 20.02.2003
(51) Int. Cl.: C08G 18/42, C08G 18/60, C08G 18/80, C08G 69/48, C08G 63/91

(54) **PROCESS FOR PREPARING A HIGH-MOLECULAR POLYAMIDE, POLYESTER, COPOLYESTER, COPOLYAMIDE OR POLYESTER-AMIDE BLOCK COPOLYMER**
VERFAHREN ZUR HERSTELLUNG EINES HOCHMOLEKULAREN POLYAMIDS, POLYESTERS, COPOLYESTERS, COPOLYAMIDS ODER POLYESTER-AMID-BLOCKCOPOLYMERS
PROCEDE DE PREPARATION DE COPOLYMERE SEQUENCE DE POLYAMIDE, DE POLYESTER, DE COPOLYESTER, DE COPOLYAMIDE OU DE POLYESTER-AMIDE DE POIDS MOLECULAIRE ELEVE

(30) Priority: 22.02.2002 EP 02075724
(43) Date of publication of application: 17.11.2004
(73) Proprietor: DSM IP Assets B.V., 6411 TE Heerlen (NL)
(72) Inventor: LOONTJENS, Jacobus, Antonius, NL-6231 KK Meerssen (NL); PLUM, Bartholomeus, Johannes, Margretha, NL-6235 AJ Ulestraten (NL)
(74) Representative: Mooij, Johannes Jacobus
(86) International application number: PCT/NL2003/000133
(87) International publication number: WO 2003/074581

(56) References cited:
- DE-A- 4 430 663
- US-A- 4 689 361

## Description

The invention relates to a process for preparing a high-molecular polyamide, polyester, copolyester, copolyamide or polyester-amide block copolymer by melt-mixing polyamide or polyester or copolyesters or a mixture or mixtures of a polyamide and/or a polyester having a lower molecular weight, with a diisocyanate. Under high molecular polyamide, polyester, copolyester, copolyamide or polyester amide block copolymer is understood a polymer with a higher molecular weight than the respective polymer before melt mixing.

Such a process is for example known from DE 430663 A1, in which a diisocyanate is used to increase the viscosity of polyamide-6. The diisocyanate used in the examples of DE 430663 A1 are generally 4,4'-diphenylmethanediisocyanate (MDI) or hexamethylenediisocyanat (HMDI).

Diisocyanates however have the drawback of leading to undesired side-reactions and discoloration of the polyamide, polyester, copolyester, copolyamide or polyester-amide block copolymer. These side-reactions and discoloration effects of diisocyanate are extensively described by J.Kylmä, et. al. in Polymer 42 (2001)3333-3343, by B. Guo et. al. in Journal of Applied Polymer Science, Vol. 71, 1827-1834 (1999) and by N. Torres et. al. in Journal of Applied Polymer Science, Vol. 79, 1816-1824, (2001). As side reactions branching of the polymer can occur. A branched polymer is undesirable for polymer processing, e.g. fibre spinning, as it reduces the drawability of the fibre and consequently reduces the attainable mechanical properties.

The invention's aim is hence to provide a process for preparing a high-molecular polyamide, polyester, copolyester or polyester-amide block copolymer that does not involve the above drawbacks.

The inventors have now most surprisingly found that when the polyamide, the polyester, copolyester or mixtures thereof having the lower molecular weight reacts in the melt with a blocked diisocyanate having the following formula 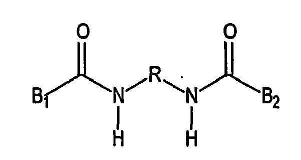 wherein R = linear, branched or cyclo aliphatic C₂-C₂₀ or aromatic C₆-C₂₀, for example: 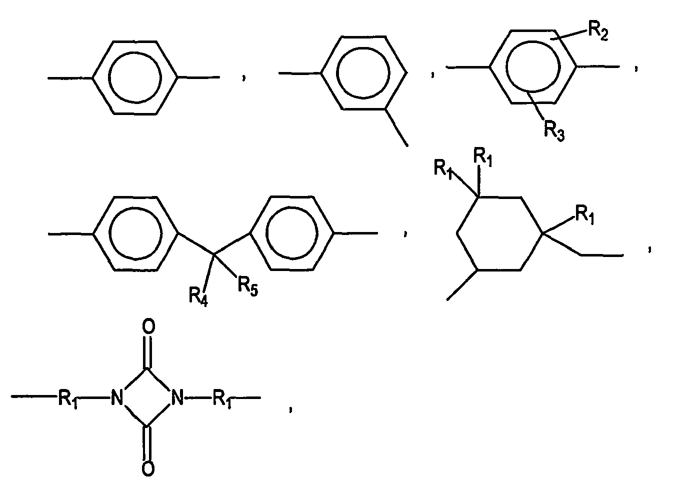 and R₁, R₂, R₃, R₄, R₅ = Aliphatic C₁-C₁₀, chloro, bromo, fluoro and B₁, B₂ = caprolactam, imidazole, dimethyl-pyrazole, triazole, oxim, malonic acid ester, ethylacetylacetonate, phenol, cresol, aliphatic alcohol, secundary amine, hydroxy benzoic acid methyl ester.

With the process of the invention, a colorless, stable linear polyamide or polyester or copolyester with increased molecular mass is very quickly obtained. Phenylene bisoxazoline or oxazine gives an additional increase in the molecular weight when used next to the blocked isocyanate. The use of phenylene bisoxazoline or oxazine is optional.

Blocked diisocyanates are commercially available from Bayer, Dai Nippon Ink, Nippon Polyurethanes, Asahi, Takeda, Rhodia, Baxenden and Creanova.

The amount of blocked diisocyanate used in the process, according to the invention, may vary within a wide range. Usually at least 0.05 wt.%, preferably at least about 0.1 wt.%, relative to the polyamide or the polyester or the copolyesters, will be required to obtain an appreciable effect. Amounts of more than 4 wt.% result only in higher costs.

Usually a person skilled in the art will adjust the amount of blocked diisocyanate to be used to the number of amino or hydroxyl end groups available and the increase in viscosity to be realized as a result of the increased molecular weight. He will usually determine the optimum amount for his situation through simple experimentation.

In principle, the process of the invention can be used for all types of polyamides and polyesters. The polyamides include at least the aliphatic polyamides, for example polyamide-4, polyamide-6, polyamide-8, polyamide-4,6, polyamide-6,6, polyamide-6,10, polyamides derived from an aliphatic diamine and an aromatic dicarboxylic acid, for example polyamide-4,T, polyamide-6,T, polyamide-4,I, in which T stands for terephthalate and I for isophthalate, copolyamides of linear polyamides and copolyamides of an aliphatic and a partially aromatic polyamide, for example 6/6,T, 6/6,6/6,T.

The polyesters include at least polyesters derived from aliphatic dicarboxylic acids and diols, polyesters from aliphatic diols and aromatic dicarboxylic acids, copolyesters that are partially aliphatic and partially aromatic and polyesters that contain units derived from cycloaliphatic dicarboxylic acids and diols. Specific examples are polybutylene adipate, polyethylene terephthalate, polyethylene naphthalate, polybutyleneterephthalate, polypropyleneterephthalate, copolyesters of polybutyleneadipate and polybutyleneterephthalate, the polyester derived from butanediol and cyclohexane dicarboxylic acid.

The copolyesters include at least polyesters derived from aliphatic dicarboxylic acids and diols, polyesters from aliphatic diols and aromatic dicarboxylic acids, copolyesters that are partially aliphatic and partially aromatic and polyesters that contain units derived from cycloaliphatic dicarboxylic acids and diols. Specific examples are polybutylene adipate, polyethylene terephthalate, polyethylene naphthalate, polybutyleneterephthalate, copolyesters of polybutyleneadipate and polybutyleneterephthalate, the polyester derived from butanediol and cyclohexane dicarboxylic acid and polyethers as polyoxytetramethylene, polypropylene glycol, polyethylene glycol and copolyethers of ethylene oxide and propylene oxide, Jeffamines, amino terminal acrylonitril-butadiene copolymers.

Mixtures of polyesters and/or polyamides are included in the process of the invention as well. This makes it possible to produce a copolymer, starting from homopolymers and the blocked isocyanate. Furthermore it is possible to add hydroxy- or amine functional additives in the process of the invention. An example of a hydroxy functional additive is polyoxytetramethylene or the corresponding oligomer.

The process according to the invention can be carried out in a simple manner using the usual melt-mixing techniques and equipment, for example by dry blending the polyamide or polyester having a lower molecular weight and the blocked diisocyanate and optionally also other additives in a solid state, for example in a tumbler drier, after which the mixture obtained is melted in a usual melt-mixing apparatus, for example a Haake kneader, a Brabender mixer or a single- or twin-screw extruder. The different components can also be fed to the mixing apparatus separately.

Best results are obtained if the lower molecular polyamide or polyester are thoroughly dried.

The blocked diisocyanate can also be added to the melted polyamide or polyester product stream in the polymerisation process as it leaves the polymerization reactor. The polymerization process can be carried out both batchwise or in a continuous mode. In the first case a reduction of the residence time in the reactor can be realized and thus an increase in productivity; with the continuous process the post-condensation step, that is usually necessary to obtain a polyamide or polyester of sufficient molecular weight, can be avoided.

The molecular weight of the polyamide or polyester having the lower molecular weight may vary over a wide range and is mainly determined by economical reasons and the source of the material. In general it may vary from 1000 to 20.000 g/mol expressed as number averaged molecular weight Mₙ. However situations are possible in which a mixture containing a polyamide or polyester of high molecular weight for instance 25.000 g/mol and an appreciable fraction oligomeric polyamide or polyester of molecular weight less than 1000 g/mol is reacted in the melt with the blocked isocyanate according to the present invention.

The molecular weight of the high molecular weight polyamide or polyester to be produced by the process of the invention can be freely chosen and generally is higher than 15.000, preferably higher than 20.000, even more preferably higher than 25.000 g/mol.

The polyamide or polyester obtained by the process of the invention can be processed into shaped parts by injection or blow moulding, extrusion or melt spinning to obtain moulded articles, films and semi-shaped products as e.g. stock shapes and fibres, respectively.

The invention will now be elucidated with reference to the following examples, without however being limited thereto.

### Example 1 and 2; Comparative experiment 1.

### Materials used:

a. polyamide-6 having a ηᵣₑₗ = 2.56 measured in formic acid and a concentration of end groups -COOH = 0.052 meq/g -NH₂ = 0.052 meq/g.
b. Caprolactam blocked diisocyanate of hexamethylene diisocyanate: 'Blocked HDI'

Nylon-6 was grinded and dried over night at 100°C, in nitrogen under vacuum. The blocked diisocyanate was dissolved in chloroform and mixed with the polymer to achieve a homogeneous mixture. This mixture was dried at 50°C in nitrogen over night. The mixture was molten in a DSM midi extruder (15 g), at 240°C until a constant torque of the screw was obtained and the mixing was continued during 4 minutes. The torque was measured at different times. The mixing was carried out under a nitrogen blanket to prevent the risk of the polyamide decomposing as a result of oxidation.

Table 1 shows the compositions investigated and the results of the measurements.

**Table 1**

| Measurement | Comparative Experiment 1 | Example 1 | Example 2 |
|---|---|---|---|
| | Blank | 1 eq Blocked HDI* | 2 eq Blocked HDI* |
| RPM | 80 | 80 | 80 |
| Mixing time, | 40" | 45" | 45" |
| Total residence time in midi extruder | 4'40' | 4'45" | 4'45" |
| ηᵣₑₗ | 2,34 | 2,93 | 3,38 |
| Melt viscosity at ω = 1 rad/s in Pa.s | 550 | 1500 | 3500 |

| | | | |
|---|---|---|---|
| * One and two mol blocked isocyanate groups per mol amine end group of nylon-6. | | | |

The results of Experiments 1 and 2 show the surprisingly high activity of the blocked diisocyanate, as a result of which a stable high value of the melt viscosity (which was monitored through the torque of the midi extruder) was obtained after 2 minutes already, whereas this is not the case when no use is made of the blocked diisocyanate. Furthermore melt viscosity measurements, as given in table 1, were done through Dynamic Mechanical Spectroscopy (DMS). This technique not only gives information regarding the viscosity of a polymer melt, but also whether branching of a polymer has occurred. According to the-DMS measurements the products of experiment 1 and 2 were strictly linear, no indication for branching was found.

Thanks to this short reaction time, which is of the same order as the residence time in a normal extrusion, e.g. in a commercial polymer production plant, a stable, increased melt viscosity can be realized in practice.

The relative viscosity, ηᵣₑₗ, is a measure for the molecular weight of a polymer. For determining the relative viscosity the polymer is dissolved in a solvent and the obtained solution is passed through an Übbelohde capillary viscosimeter. The time, t, for a given volume of solution to pass through the Übbelohde capillary is measured and compared with the time, to, for the same volume of solvent to pass through the Übbelohde capillary. The ratio t/t₀ is referred to as the relative viscosity. For the polyamide the relative viscosity was measured in a solution of 1 gram polyamide in 100 ml of 90 wt.% formic acid at a temperature of 25 °C. Übbelohde capillaries were used in accordance with ISO307.

The melt viscosity was measured at 230 °C on an ARES DMS equipment.

## Claims

1. Process for preparing a high-molecular polyamide, polyester, copolyester, copolyamide or polyester-amide block copolymer by melt-mixing a polyamide, a polyester, copolyesters or a mixture or mixtures of a polyamide and/or a polyester having a lower molecular weight, than the polymer obtained with the process of the invention, with an diisocyanate, **characterized in that** the diisocyanate is a blocked diisocyanate having following the formula, 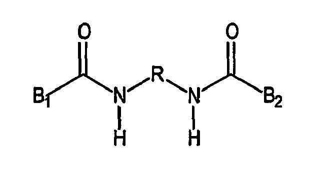 wherein R = linear, branched or cyclo aliphatic C₂-C₂₀ or aromatic C₆-C₂₀ and B₁, B₂ = caprolactam, imidazole, dimethyl-pyrazole, triazole, oxim, malonic acid ester, ethylacetylacetonate, phenol, cresol, aliphatic alcohol, secondary amine, hydroxy benzoic acid methyl ester.

2. Process according to Claim 1, **characterized in that** use is made of 0.05 to 4 wt.% of the blocked diisocyanate, relative to the polyamide, the polyester, the copolyester or the mixture or both.

3. Process of any one of claims 1-2, wherein the melt mixing is done in an extruder.

4. Process of claim 3 wherein the extruder is a twin-screw extruder.

## Patentansprüche

1. Verfahren zur Herstellung eines hochmolekularen Polyamids, Polyesters, Copolyesters, Copolyamids oder Polyesteramidblockcopolymers, bei dem man ein Polyamid, einen Polyester, Copolyester oder eine Mischung oder Mischungen von einem Polyamid und/oder einem Polyester mit einem geringeren Molekulargewicht als das mit dem erfindungsgemäßen Verfahren erhaltene Polymer mit einem Diisocyanat in der Schmelze vermischt, **dadurch gekennzeichnet, daß** man als Diisocyanat ein blockiertes Diisocyanat gemäß nachstehender Formel: 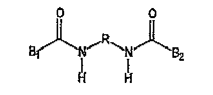 mit den Bedeutungen R = lineares, verzweigtes oder cycloaliphatisches C₂-C₂₀ oder aromatisches C₆-C₂₀ und B₁, B₂ = Caprolactam, Imidazol, Dimethylpyrazol, Triazol, Oxim, Malonsäureester, Ethylacetylacetonat, Phenol, Cresol, aliphatischer Alkohol, sekundäres Amin, Hydroxybenzoesäuremethylester, einsetzt.

2. Verfahren nach Anspruch 1, **dadurch gekennzeichnet, daß** man das blockierte Diisocyanat bezogen auf das Polyamid, den Polyester, den Copolyester oder die Mischung der beiden mit 0,05 bis 4 Gew.-% einsetzt.

3. Verfahren nach einem der Ansprüche 1-2, bei dem das Vermischen in der Schmelze in einem Extruder erfolgt.

4. Verfahren nach Anspruch 3, bei dem es sich um einen Doppelschneckenextruder handelt.

## Revendications

1. Procédé de préparation d'un polyamide, polyester, copolyester, copolyamide ou copolymère bloc polyester-amide de haut poids moléculaire par mélange à l'état fondu d'un polyamide, d'un polyester, de copolyesters ou d'un mélange ou de mélanges d'un polyamide et/ou d'un polyester ayant un poids moléculaire inférieur à celui du polymère obtenu par le procédé de l'invention, avec un diisocyanate, **caractérisé en ce que** le diisocyanate est un diisocyanate bloqué ayant la formule suivante, 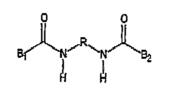 dans laquelle R = C₂-C₂₀ linéaire, ramifié ou cycloaliphatique ou C₆-C₂₀ aromatique et B₁, B₂ = caprolactame, imidazole, diméthylpyrazole, triazole, oxime, ester d'acide malonique, acétonate d'éthylacétyle, phénol, crésol, alcool aliphatique, amine secondaire, ester méthylique d'acide hydroxybenzoïque.

2. Procédé selon la revendication 1, **caractérisé en ce qu'**on utilise de 0,05 à 4 % en poids du diisocyanate bloqué par rapport au polyamide, au polyester, au copolyester ou au mélange ou à l'ensemble.

3. Procédé selon l'une ou l'autre des revendications 1 et 2, **caractérisé en ce que** le mélange à l'état fondu est effectué dans une extrudeuse.

4. Procédé selon la revendication 3, **caractérisé en ce que** l'extrudeuse est une extrudeuse bi-vis.
